# EUROPÄISCHE PATENTSCHRIFT

(11) **EP 0 602 469 B1**
(45) Veröffentlichungstag und Bekanntmachung des Hinweises auf die Patenterteilung: **12.04.2000**
(21) Anmeldenummer: 93119477.3
(22) Anmeldetag: 03.12.1993
(51) Int. Cl.: G11B 27/32

(54) **Verfahren und Vorrichtung zur Schrägspurmagnetbandaufzeichnung**
Method and apparatus for recording on a magnetic tape with slant tracks
Méthode et appareil d'enregistrement sur bande magnétique à pistes obliques

(30) Priorität: 12.12.1992 DE 4241986
(43) Veröffentlichungstag der Anmeldung: 22.06.1994
(73) Patentinhaber: DEUTSCHE THOMSON-BRANDT GMBH, 78048 Villingen-Schwenningen (DE)
(72) Erfinder: Kaaden, Jürgen, D-78052 Villingen-Schwenningen (DE); Reiner, Gerhard, D-78136 Schonbach (DE); Mahr, Peter, D-78126 Königsfeld (DE)

(56) Entgegenhaltungen:
- EP-A- 0 211 388
- EP-A- 0 320 744
- WO-A-84/02221
- DE-A- 3 309 029
- US-A- 3 681 524
- US-A- 4 703 311

## Beschreibung

Die Erfindung betrifft ein Verfahren und eine Vorrichtung zur Schrägspurmagnetbandaufzeichnung.

Es ist bekannt, bei VHS-Aufzeichngsgeräten für die Synchronisation des Servosystems ein Kontrollsignal in Abständen von 40 ms (in 50 Hz Systemen) in einer Längsspur an der unteren Bandkante aufzuzeichnen. Das Auftreten dieser Signale kann gezählt und als Zeitinformation ausgewertet werden. Nachteilig hierbei ist, daß die Kassette immer bis zum Bandanfang transportiert werden muß, um einen Absolutwert ermitteln zu können.

Ferner wurde im Jahr 1986 das Control Track Longitudinal CTL-System für VHS eingeführt. Durch zeitliche Variation der bislang nicht benutzten Rückflanke des Servosynchronsignales kann alle 40 ms ein Informationsbit übertragen werden. Ein Zeitcoder ist vorgesehen, wobei alle zwei 2 s ein komplettes Datenwort zur Verfügung steht. Nachteilig ist hierbei die Auflösung von 2 s und die relative Codierung der Framepulse.

Solch ein ähnliches Verfahren ist auch aus der deutschen Offenlegungsschrift DE-A- 33 09 029 bekannt, bei dem in einer Synchronspur auf dem Magnetband ein Datenblock für eine Zeitcodeinformation abgespeichert wird. Die Synchronspur betrifft eine Längsspur des Magnetbandes. Die Zeitcodeinformation wird im Raster von einer Sekunde erzeugt.

Auch aus der US-A-4 703 311 ist es bekannt die Rückflanken eines Frameimpulses für eine Pulslängenmodulation zu variieren um damit ein Bit einer Zeitcodeinformation geringer Auflösung darzustellen.

Bei professionellen Geräten hat sich der Zeitcode gemäß IEC 461 bewährt. Mit hoher Auflösung (500 µs/Bit im Longitudinal Time Code LTC) sind sowohl in der Längs- als auch in der Schrägspur Zeitinformationen eingeschachtelt. Nachteilig hierbei ist die hohe Auflösung. Sie verhindert bei hohen Bandtransportgeschwindigkeiten ein Auslesen des Absolutwertes.

Aus der Veröffentlichung der internationlen Anmeldung WO 84/02221 ist ein Gerät zur Datenspeicherung bekannt, bei dem zur eindeutigen Identifizierung von Schrägspuren eines Magnetbandes ein Gruppenidentifikationscode (Zeitcode geringer Auflösung) digital in einer Längsspur des Magnetbandes abgelegt wird und ein Spuridentifikationscode (Zeitcode hoher Auflösung) in einer anderen Längsspur abgelegt wird.

Der Erfindung liegt die Aufgabe zugrunde, ein digitales Aufzeichnungsverfahen und eine entsprechende Aufzeichnungsvorrichtung für Video- und Audiosignale anzugeben mit einem Zeitcodiersystem hoher Auflösung, das bei hohen Bandtransportgeschwindigkeiten (Suchlauf/Vor- bzw. Rücklauf) die Zeitmarken geringerer Auflösung lesen kann, jedoch besonders kostengünstig realisiert werden kann. Diese Aufgabe wird durch die im Anspruch 1 und 7 angegebene Erfindung gelöst. Vorteilhafte Weiterbildungen der Erfindung sind in den abhängigen Ansprüchen angegeben.

Bei dem erfindungsgemäßen Aufzeichnungsverfahren wird eine Längsspuraufzeichnung verwendet, wobei die Rückflankenmodulation bei den Phasenreferenzimpulsen auf der Synchronspur wegen deren großen Auflösungsanforderungen und der dadurch bedingten hohen Frequenz nicht möglich ist. Das erfindungsgemäße Aufzeichnungsverfahren Kommt mit einer zusätzlichen Längsspur aus. Die aufzuzeichnende Zeitcodeinformation wird in zwei Anteile zerlegt. Ein Anteil enthält die relevanten Werte wie Stunden/Minuten/Sekunden (h/m/s). Dieser Anteil wird in einer Längsspur mit einem Bitabstand aufgezeichnet, der auch bei hohen Bandgeschwindigkeiten gelesen werden kann. Der zweite Anteil enthält die Framezählinformation und wird in das Signal der Längsspur durch Frequenztrennung eingeschachtelt (Lösung 2). Die Folgende Lösung 1 ist nur zu Erklärungszwecken offenbart und ist kein Teil der Erfindung.

### Lösung 1:

Das Signal der Spur 1 (weiterhin S1 benannt) enthält alle 40 ms eine Bitinformation. Jedes Framesignal kennzeichnet einen in sich geschlossenen Bereich, der in den Schrägspuren aufgezeichneten Daten. Es wird dem Servosystem von der Videosignalverarbeitung zugeführt, hat eine Zeitdauer von 40 ms und dient zur Synchronisation. Ein Abschnitt von 25 Frameimpulsen umfaßt somit nur die Zeit von einer Sekunde. Das aufgezeichnete Signal der ersten drei Frameimpulse ist eine symmetrische Rechteckfolge mit einem Puls-Pausenverhältnis von exakt 50 %. Sie dient zur Synchronisation. Die nachfolgenden Datenbits sind durch ein Puls/Pausenverhältnis von 25 % im Falle eines H-Bits und 75 % im Falle eines L-Bits gekennzeichnet. Die Auswertung umfaßt Zählstufen, die während des H-Zustandes des Eingangssignales inkrementieren und während des L-Zustandes dekrementieren. Bei jeder positiven Flanke wird der Zählerstand abgespeichert, der Zähler danach wieder gelöscht. Der Zählerwert wird auf 0, positiv oder negativ getestet. Die jeweilige Entscheidung liefert ein Synchronbit, H-Bit, L-Bit.

Den Synchronisationsbits folgen 3 Kontrollbits, die für das Ge samtsystem Steuerinformationen darstellen. Beispielsweise: Anzahl der Spuren/frame (abhängig von Netzfrequenz 50/60 Hz), das Bildseitenverhältnis (16:9 oder 4:3) und ob HD-( High Definition) oder SD-(Standard Definition) Signale bei der Aufzeichnung verwendet wurden.

Alternative Verwendung dieser Bits ist auch in Kombinatorik mit 2³=8 darstellbaren Zuständen möglich. Eine Zuordnung der Kontrollbits könnte wie folgt aussehen 011 ≡ Longplay, HD, 16:9, 50Hz

Die folgenden 19 Bits tragen gruppenweise die Information über Stunden (4 Bit), Minuten (6 Bit) und Sekunden (6 Bit), jeweils binär gezählt und mit je mit einem Paritätsbit (gerade Parität) pro Gruppe geschützt. Die beschriebene Sequenz aus 25 Bits wird jede Sekunde einmalig aufgezeichnet.

Das Signal der Spur 2 (weiterhin S2 genannt) beinhaltet für jeden Frameimpuls ein Pattern. Für jeden der 25 abgebildeten Frameimpulse existiert ein Pattern aus 6 Bit, das synchron mit jeder Frameinformation aus S1 startet, jedoch vor Ablauf der Frameintervalle endet. Dieses Pattern beinhaltet auf 5 Bit die Zählinformation für die Framenummer, das sechste Bit dient zur Paritätsprüfung. Die logischen Zustände sind durch die Puls-Pausenverhältnisse der einzelnen Bits gekennzeichnet. Es beträgt 33 % im Falle eines H-Bits und 66 % in Falle eines L-Bits. Die Werte 25 %, 50 %, 75 % für S1 Signale und 33 %, 66 % für S2 Signale sind gewählt worden, um alle Signale mit einem einzelnen Takt erzeugen zu können.

Die Information aus Spur 1 dient zur Synchronisation (Zählerstandzuordnung) beider Spuren und trägt den Zeitzählwert geringer Auflösung (h/m/s). Sie ist damit immer erforderlich. Spur 2 trägt eine abhängige, hochaufgelöste Zeitinformation, deren zeitliche Ereignisse synchron mit Änderung in der Spur 1 erfolgen.

### Lösung 2:

Alle Informationen werden in einer Spur aufgezeichnet. Signale verschiedener Wichtung werden als unterschiedliche Frequenzen aufgezeichnet. Im schnellen Vorlauf es ist nicht sinnvoll, Framenummern zu ermitteln, die in der Anzeige nicht mehr darstellbar sind.

Vorzugsweise wird ein hochfrequentes Signal für die Feinauflösung (Framenummern) und ein niederfrequentes für die Normalauflösung (h/m/s) in einer Spur aufeinanderfolgend aufgezeichnet. Als Basissignal (niederfrequent) wird das vorher beschriebene S1 Signal verwendet, wobei die fallende Flanke jedes in S1 aufgezeichneten Pulses mit einer Folge von 6 Bit zeitlich verschoben wird. Dabei wird symmetrisch vor und hinter der Flanke eine symmetrische Folge von jeweils 3 Bit ein bzw. hinzugefügt. Es besteht dabei jedes dieser Bits aus einem oder zwei Schwingungszügen, mit einem Puls-Pausenverhältnis von 50 %. Hierdurch ist gewährleistet, daß im Umspulbetrieb die Amplitudenreduktion für positive und negative Impulse eines Bits konstant ist, was eine Auswertung erleichtert. Die Bitlänge für H-Bits und L-Bits ist gleich. Dies gewährleistet, daß die Länge des Auswertefensters für alle Bits konstant ist. Die maximale Bitlänge ergibt sich durch die zulässige Verschiebung des niederfrequenten Zeitcodesignales. Ein Wert von +/- 3 ms wird auch im Umspulbetrieb eine saubere Indentifikation ermöglichen. Besondere Aufmerksamkeit liegt dabei auf den drei Synchronisierbits in den Frameintervallen 1 - 3. Dabei unterbleibt die Einschachtelung des hochfrequenten Zeitcodes während dieser Phase, um ein Erkennen des Datensequenzbeginns auf jeden Fall sicherzustellen. Der Framezähler zählt normal weiter, die Rückflanken der Preamblepulse werden jedoch nicht zeitlich moduliert. Mit dem ersten Kontrollbit wird die Einschachtelung der hochausgelösten Zeitcodeinformation dann fortgesetzt.

Die Vorteile der Lösung 1 und der Lösung 2 liegen im folgenden darin: Die Lösungen 1 und 2 stellen eine kostenoptimale Lösung der Zeitcodeproblematik dar. Bei der Wahl der Lösung 1 kann nach Einlegen der Kassette sofort im Suchlaufbetrieb erkannt werden, in welche Richtung das Band bewegt werden muß, um so schnell wie möglich die gesamte Zeitinformation lesen und anzeigen zu können. Das System kehrt danach an den Framebeginn zurück, der beim Einlegen der Kassette zuerst erkannt wurde.

Bei Verwendung der der Erfindung entsprechenden Lösung 2 ist dieses im Suchlaufbetrieb nur eingeschränkt möglich. Bei den Preambleimpulsen fehlen Daten, und die notwendige Erkennungssicherheit ist nur bis zur 3-fachen Suchlaufgeschwindigkeit gegeben. Daneben zeichnet sich die Lösung 2 durch hohe Kosteneffizienz aus, da nur jeweils die Aufnahme-Wiedergabeelektronik für einen Kanal zur Verfügung stehen muß und nur ein Kopf benötigt wird. Durch die zur Verfügung stehende größere Spurbreite (VHS Einzelaudiospur 1 mm, Stereospur jeweils 0,35 mm) ist das System sehr robust.

Bei Umspulbetrieb wird in Lösung 1 ganz auf die Feinauflösung verzichtet, und die Daten aus S1 werden ausgewertet. Die Lösung 2 beinhaltet die Abschaltung automatisch, da bei größerer Bandvorschubgeschwindigkeit die eingeschachtelten höherfrequenten Anteile vom gesamten Wiedergabesystem so stark gedämpft werden, daß kein digitales Zeitsignal mehr aus ihnen gewonnen werden kann.

Eine zeitliche Trennung der Gruppen wird durchgeführt, da die Zeitcodeinformationen nacheinander aufgezeichnet werden.

Die Erfindung wird im folgenden anhand der Zeichnung erläutert. Darin zeigen:
- Fig. 1: die aufgezeichnete Spur S1 der Lösung 1,
- Fig. 2: die aufgezeichnete Spur S2 der Lösung 1,
- Fig. 3: die aufgezeichneten Spuren S1 und S2 der Lösung 2,
- Fig. 4: die prinzipielle Schaltung zur Aufzeichnung und Regenerierung der Signale und
- Fig. 5: die Zuordnung der Signale S1, S2.

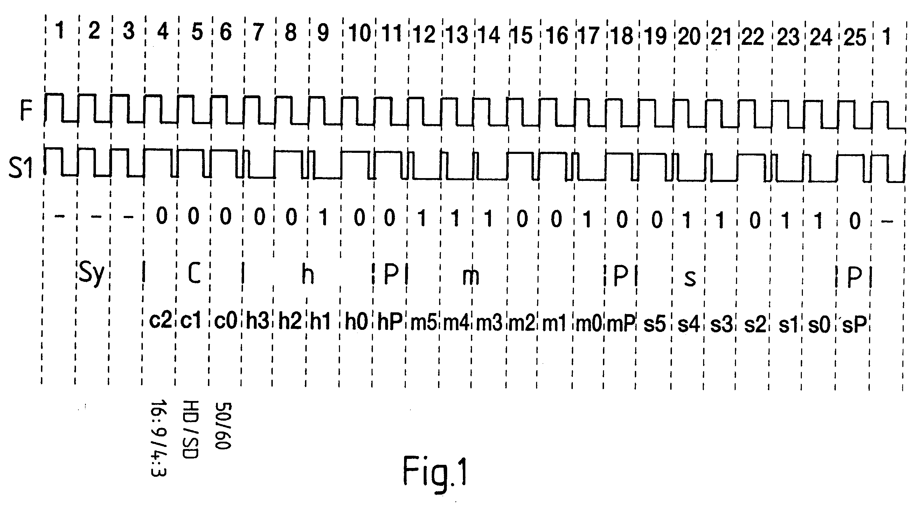

Fig. 1 zeigt das Signal der aufgezeichneten Spur S1. Das Signal der Spur S1 enthält alle 40 ms eine Bitinformation. Jedes Framesignal F kennzeichnet einen in sich geschlossenen Bereich, der in den Schrägspuren aufgezeichneten Daten. Die dargestellte Sequenz von 25 Frameimpulsen F umfaßt somit die Zeit von 1 Sekunde. Das aufgezeichnete Signal Sy der ersten drei Frameimpulse F ist eine symmetrische Rechteckfolge mit einem Puls-Pausenverhältnis von exakt 50 %. Sie dient zur Synchronisation.

Den Synchronisationsbits folgen 3 Kontrollbits C, die für das Gesamtsystem Steuerinformationen darstellen. c0 Netzfrequenz 50/60 Hz, c1 das Bildseitenverhältnis 16:9 oder 4:3 und c2 ob HD- oder SD-Signale bei der Aufzeichnung verwendet wurden.

Die folgenden 19 Bits tragen gruppenweise die Information über Stunden h (4 Bit), Minuten m(6 Bit) und Sekunden s (6 Bit), jeweils binär gezählt und mit je mit einem Paritätsbit P(gerade Parität) pro Gruppe geschützt. Die beschriebene Sequenz aus 25 Bits wird jede Sekunde einmalig aufgezeichnet.

Die nachfolgenden Datenbits der Frameimpulse F4 bis F25 sind durch ein Puls/Pausenverhältnis von 25 % in Falle eines H-Bits und 75 % im Falle eines L-Bits gekennzeichnet.

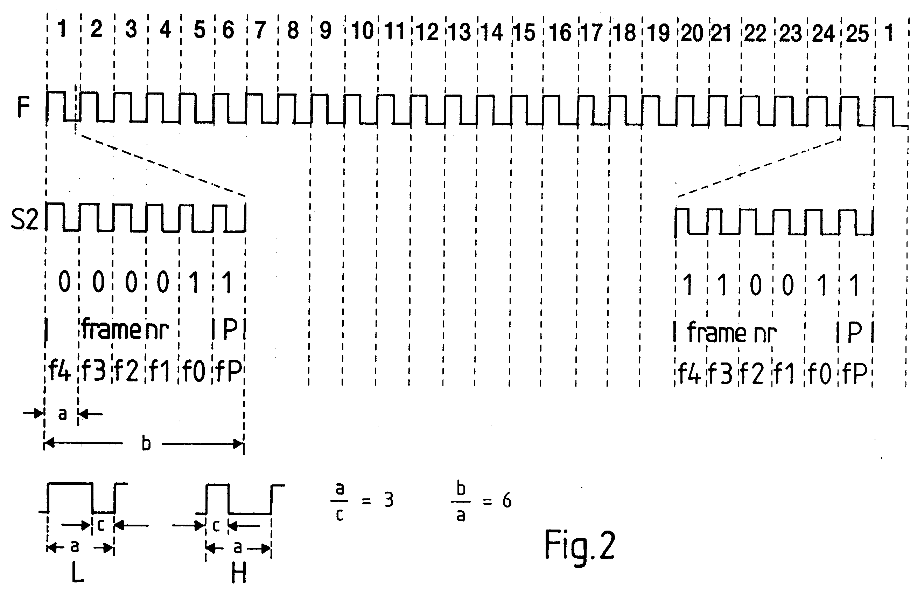

Fig. 2 zeigt die aufgezeichnete Spur S2 der Lösung 1. Für jeden der 25 abgebildeten Frameimpulse existiert ein Pattern aus 6 Bit, das synchron mit jeder Frameinformation aus S1 startet, je-, doch vor Ablauf der Frameintervalle endet. Dieses Pattern hat in den ersten 5 Bit die Zählinformation f4 bis f0 für die Framenummer F1, das sechte Bit dient zur Paritätsprüfung. Ein Pattern hat eine Länge b und ein Bit die Länge a. Ein Längenverhälnis von b zu a gleich 6 wird bemessen. Die Länge des anzeigenden Impulses ob high H oder low L ist mit c festgelegt und das Längenverhältnis von a zu c gleich 3 wird bemessen.

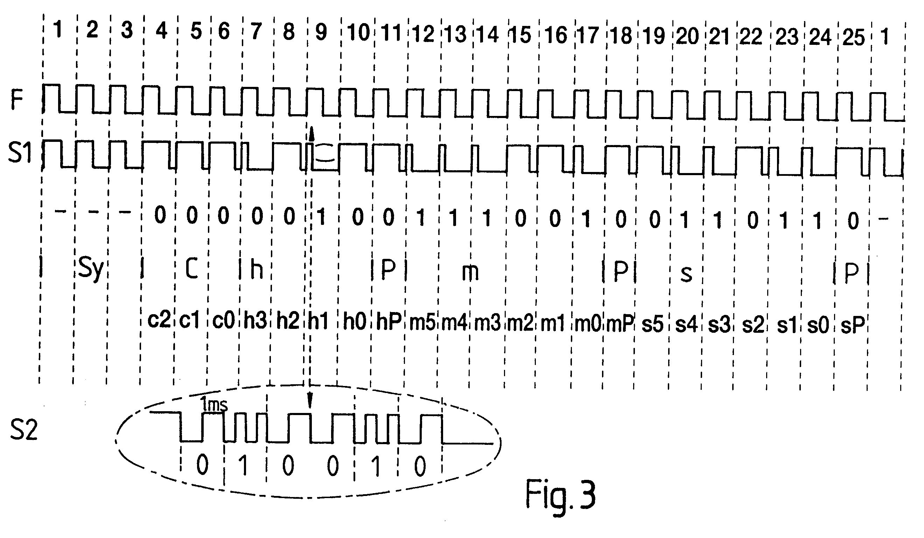

Fig. 3 zeigt die Aufzeichnung der Spur S1 und S2 der Lösung 2. Die Spur S1 ist gleich der in der Lösung 1 aufgezeichnet Spur S1. Die Spur S1 ist ein niederfrequentes Signal, und die Spur S2 ist ein hochfrequentes Signal. Das als Basissignal dienende niederfrequente Signal der Spur S1 wird dermaßen ausgenutzt, daß bei jeder fallenden Flanke der Spur S1 symmetrisch vor und hinter der Flanke eine symmetrische Folge von jeweils drei Bits ein- bzw. hinzugefügt wird. Die hinzugefügten Bits bestehen dabei aus einem oder zwei Schwingungszügen mit einem Puls-Pausenverhältnis von 50 %. Hierdurch ist gewährleistet, daß im Umspulbetrieb die Amplitudenrekonstruktion für positive und negative Folge eines Bits konstant ist, was eine Auswertung erleichtert. Die Bitlänge für H-Bits und L-Bits ist hierbei gleich, so daß die Länge des Auswertefensters für alle Bits konstant ist. Die maximale Bitlänge ergibt sich durch die zulässige Verschiebung des niederfrequenten Zeitcodesignales. Ein Wert von +/- 3 ms wird auch im Umspulbetrieb eine saubere Identifikation ermöglichen.

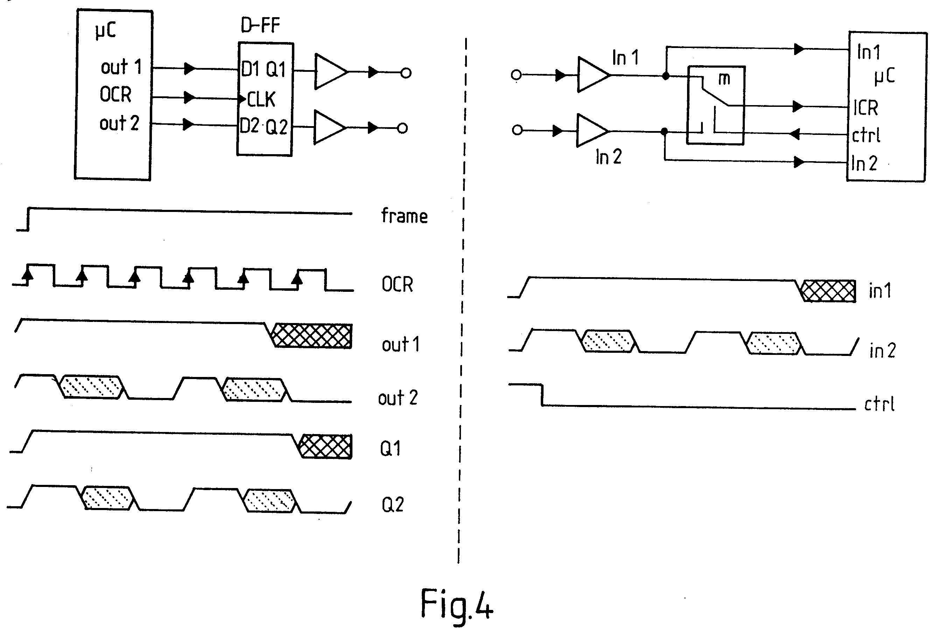

Fig. 4 zeigt die prinzipielle Schaltung zur Aufzeichnung und Regenerierung der Signale. Die linke Seite stellt die Generierung der Signale dar. Ein Microcontroller µC stellt für die Spuren S1 und S2 die logischen Zustände an out1 bzw. out2 zusammen mit einem zeitgenauen Takt OCR. Out1 und out2 werden in einem nachfolgenden D-Flip Flop mit dem Takt synchronisiert und stehen an Q1 als S1 bzw. an Q2 als S2 zur Aufzeichnung zur Verfügung. Auf der rechten Hälfte von Fig. 4 ist der Wiedergabeteil dargestellt. An den Ausgängen der Verstärker stehen die rechteckigen Signale in1 sowie in2 zur Verfügung. Es folgt ein Multiplexer m, der eines dieser Signale an dem hochauflösenden Meßeinganges eines Microcontrollers µC nach vorgegebenen Schema mit Hilfe des Signales ctrl schaltet. Diese dargestellte Konfiguration ist bei Verwendung eines Microkontrollers µC zu verwenden, der wenige hochauflösende Meßeingänge ICR aufweist, mit denen sich die Zeit zwischen Eingangssignalflanken mit einer Genauigkeit von 250 ns messen läßt, welche aber über eine Vielzahl von Normalein-Ausgängen verfügt. Stehen dagegen zwei dieser ICR-Eingänge zur Verfügung, so sind die Leitungen in1 und in2 direkt mit ICR1 bzw. ICR2 zu verbinden. Der Multiplexer m mit der Steuerleitung ctrl kann dann entfallen. Ein Multiplexvorgang in Form einer Signal selektion im Microcontroller ist trotzdem möglich.

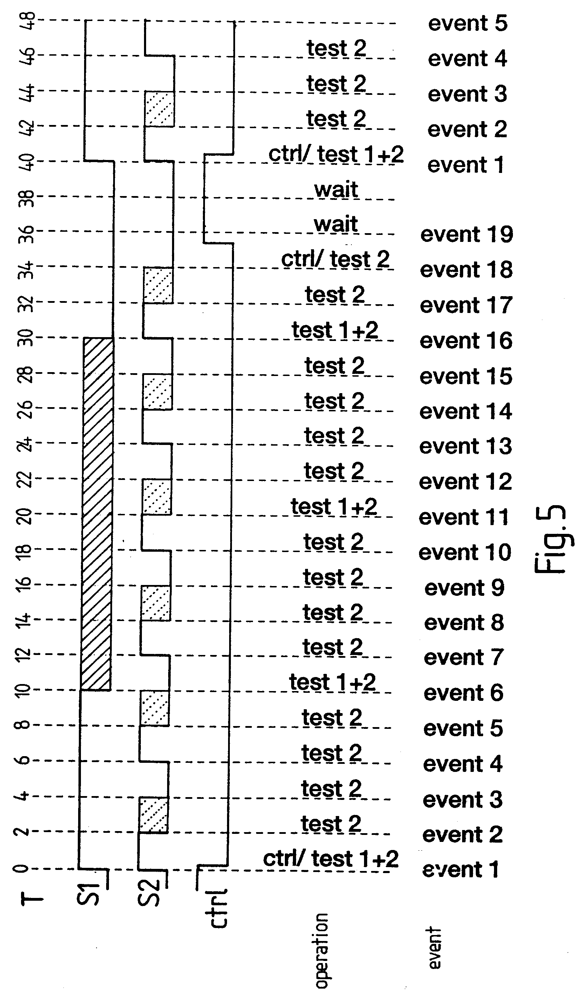

In Fig. 5 ist die Zuordnung der Signale S1, S2 und ctrl über einen Zeitraum von 48 ms dargestellt. Die schraffierten Bereiche stellen mit ihrer rechten und linken Begrenzung die Umschaltungspunkte für H-Bits bzw. L-Bits dar. Beide Signale sind miteinander verkoppelt. Im Zeitraum T0 wartet das Auswertesystem auf eine positive Flanke aus S1 (ctrl=H). Ist dieses Ereignis aufgetreten, so wird auf den zweiten Kanal umgeschaltet (ctrl=L) und der Zustand von S1 abgefragt. Die nächste Signaländerung, in der Fig.5 mit event2 bzw.event3 bezeichnet, wird vom Microcontroller registriert und wie im Diagrammfeld beschrieben umgesetzt. Die Einträge (event2, 3 sowie event4, 5 und folgend) stellen mögliche Signaländerungspunkte dar, es wird jedoch abhängig von logischen Zustand, nur entweder event 2 oder event 3 geben.

## Patentansprüche

1. Verfahren zur Schrägspurmagnetbandaufzeichnung für analoge und/oder digitale Signale unter Verwendung mindestens eines zusätzlichen Längsspurkopfes, zugehörigen Aufnahme-/Wiedergabeverstärkern sowie einer Zeitzähleinrichtung, wobei eine Zeitcodeinformation digital auf einer Längsspur (S1) aufgezeichnet wird, wobei die Zeitcodeinformation in zwei Anteile (h,m,s;framenr) eingeteilt wird, von denen der eine Anteil (h,m,s) eine Zeitcodeinformation mit geringerer Zeitauflösung angibt und der andere Anteil (framenr) eine Zeitcodeinformation mit höherer zeitlicher Auflösung angibt, wobei Frameimpulse (F) in der Längsspur (S1) aufgezeichnet werden, **dadurch gekennzeichnet**, daß die Vorderflanken der Frameimpulse (F) jeweils zur Synchronisation benutzt werden und die Rückflanken des jeweiligen Frameimpulses entsprechend des eingestellten Puls/Pausenverhältnisses H- oder L-Bits des Anteils (h,m,s) der Zeitcodeinformation mit geringerer Zeitauflösung kennzeichnen und daß der Anteil (framenr) der Zeitcodeinformation mit höherer Zeitauflösung frequenzmäßig versetzt von dem Anteil der Zeitcodeinformation mit geringerer Zeitauflösung auf derselben Längsspur (S1) digital aufgezeichnet wird.

2. Verfahren nach Anspruch 1, **wobei**, der Anteil (framenr) der Zeitcodeinformation mit höherer Zeitauflösung zeitlich miteinander verkoppelt mit dem Anteil (framenr) der Zeitcodeinformation mit geringerer Zeitauflösung auf derselben Längsspur (S2) aufgezeichnet wird.

3. Verfahren nach Anspruch 1 oder 2, **wobei**, eine Zählstufe während des H-Zustandes des Frameimpulses (F) inkrementiert, während des L-Zustandes dekrementiert, bei jeder positiven Flanke der Zählerstand abgespeichert und der Zähler gelöscht wird.

4. Verfahren nach einem der vorhergehenden Ansprüche, **wobei**, zur Einstellung des Puls-/Pausen-Verhältnisses die Werte 25%,50%,75% für das Signal der Frameimpulse (F) selbst gewählt werden, wobei die Prozentwerte die Länge eines H-Zustandes in Bezug auf die Gesamtdauer der Signale angeben und daß die entsprechenden Signale aus einem Takt erzeugt werden.

5. Verfahren nach einem der vorhergehenden Ansprüche, **wobei** ein hochfrequentes Signal für die Feinauflösung und ein niederfrequentes Signal für die Normalauflösung aufgezeichnet wird.

6. Verfahren nach einem der vorhergehenden Ansprüche, **wobei**, symmetrisch vor und hinter einer Rückflanke des Frameimpulses (F) eine symmetrische Folge von jeweils 3 Bit ein- bzw. hinzugefügt wird, wobei jedes dieser Bits aus Signalen mit einem Puls-/Pausenverhältnis, daß durch den Wert 50% gekennzeichnet ist, besteht, wobei der Prozentwert die Länge eines H-Zustandes in Bezug auf die Gesamtdauer des Signales angibt.

7. Vorrichtung zur Schrägspurmagnetbandaufzeichnung für analoge und/oder digitale Signale mit mindestens einem zusätzlichen Längsspurkopf, zugehörigen Aufnahme/Wiedergabeverstärkern sowie einer Zeitzähleinrichtung, wobei die Vorrichtung eine Zeitcodeinformation digital auf einer Längsspur (S1) aufzeichnet, wobei eine Einteilung der Zeitcodeinformation in zwei Anteile (h,m,s;framenr) erfolgt, von denen der eine Anteil (h,m,s) eine Zeitcodeinformation mit geringerer Zeitauflösung angibt und der andere Anteil (framenr) eine Zeitcodeinformation mit höherer zeitlicher Auflösung angibt, wobei eine Aufzeichnung von Frameimpulsen (F) in der Längsspur (S1) erfolgt, **dadurch gekennzeichnet**, daß eine Synchronisation basierend auf den Vorderflanken der Frameimpulse (F) erfolgt und die Rückflanken des jeweiligen Frameimpulses entsprechend des eingestellten Puls/Pausenverhältnisses H- oder L-Bits des Anteils (h,m,s) der Zeitcodeinformation mit geringerer Zeitauflösung kennzeichnen und wobei die Aufzeichnung des Anteils (framenr) der Zeitcodeinformation mit höherer Zeitauflösung frequenzmäßig versetzt von dem Anteil (h,m,s) der Zeitcodeinformation mit geringerer Zeitauflösung auf derselben Längsspur (S1) erfolgt.

## Claims

1. Method for helical scan magnetic tape recording for analogue and/or digital signals using at least one additional longitudinal track head, associated recording/reproduction amplifiers and also a time counting device, wherein a time code information item is recorded digitally on a longitudinal track (S1), wherein the time code information item is divided into two components (h,m,s; framenr) of which one component (h,m,s) specifies a time code information item with a relatively low temporal resolution and the other component (framenr) specifies a time code information item with a relatively high temporal resolution, wherein frame pulses (F) are recorded in the longitudinal track (S1), **characterized** in that the leading edges of the frame pulses (F) are in each case used for synchronization purposes and the trailing edges of the respective frame pulse identify, in accordance with the mark/space ratio set, H or L bits of the component (h,m,s) of the time code information item with a relatively low temporal resolution, and in that the component (framenr) of the time code information item with a relatively high temporal resolution is digitally recorded on the same longitudinal track (S1) in a manner offset in terms of frequency from the component of the time code information item with a relatively low temporal resolution.

2. Method according to Claim 1, **wherein** the component (framenr) of the time code information item with a relatively high temporal resolution is recorded in a manner temporally coupled together with the component (framenr) of the time code information item with a relatively low temporal resolution on the same longitudinal track (S2).

3. Method according to Claim 1 or 2, **wherein** a counting stage increments during the H state of the frame pulse (F) and decrements during the L state, and, with each positive edge, the counter reading is stored and the counter is cleared.

4. Method according to one of the preceding claims, **wherein**, in order to set the mark/space ratio, the values 25%, 50%, 75% are chosen for the signal of the frame pulses (F) themselves, wherein the percentages specify the length of an H state with respect to the total duration of the signals, and that [sic] the corresponding signals are generated from a clock signal.

5. Method according to one of the preceding claims, **wherein** a high-frequency signal is recorded for the fine resolution and a low-frequency signal is recorded for the normal resolution.

6. Method according to one of the preceding claims, **wherein** a symmetrical sequence of 3 bits in each case is inserted or added symmetrically before and after a trailing edge of the frame pulse (F), wherein each of these bits comprises the signals with a mark/space ratio that is characterized by the value 50%, wherein the percentage specifies the length of an H state with respect to the total duration of the signal.

7. Apparatus for helical scan magnetic tape recording for analogue and/or digital signals having at least one additional longitudinal track head, associated recording/reproduction amplifiers and also a time counting device, wherein the apparatus records a time code information item digitally on a longitudinal track (S1), wherein the time code information item is divided into two components (h,m,s; framenr) of which one component (h,m,s) specifies a time code information item with a relatively low temporal resolution and the other component (framenr) specifies a time code information item with a relatively high temporal resolution, wherein frame pulses (F) are recorded in the longitudinal track (S1), **characterized** in that synchronization based on the leading edges of the frame pulses (F) is effected and the trailing edges of the respective frame pulse identify, in accordance with the mark/space ratio set, H or L bits of the component (h,m,s) of the time code information item with a relatively low temporal resolution, and wherein the component (framenr) of the time code information item with a relatively high temporal resolution is recorded on the same longitudinal track (S1) in a manner offset in terms of frequency from the component (h,m,s) of the time code information item with a relatively low temporal resolution.

## Revendications

1. Méthode d'enregistrement sur bande magnétique à pistes obliques pour les signaux analogiques et/ou numériques en utilisant au moins une tête supplémentaire de piste longitudinale, des amplificateurs d'enregistrement et de lecture appropriés et un dispositif de comptage de durée, où une information sur le code relatif à temps est enregistrée numériquement sur une piste longitudinale (S1), où l'information sur le code relatif à temps est divisée en deux parties (h, m, s; n° de trame) dont une partie (h, m, s) indique une information sur le code relatif à temps avec un pouvoir de résolution dans le temps inférieur et l'autre partie (n° de trame) indique une information sur le code relatif à temps avec un pouvoir de résolution dans le temps supérieur, où les impulsions de trame (F) sont enregistrées sur la piste longitudinale (S1), **caractérisée en ce que** les flancs avants des impulsions de trame (F) sont utilisés pour la synchronisation et les flancs arrières de l'impulsion de trame caractérisent les bits H ou L de la partie (h, m, s) de l'information sur le code relatif à temps avec un pouvoir de résolution dans le temps inférieur, conformément au rapport impulsions/pauses ajusté, **et en ce que** la partie (n° de trame) de l'information sur le code relatif à temps avec un pouvoir de résolution dans le temps supérieur, décalée en fonction de la fréquence par rapport à la partie de l'information sur le code relatif à temps avec un pouvoir de résolution dans le temps inférieur, est enregistrée numériquement sur la même piste longitudinale (S1).

2. Méthode conforme à la revendication 1, **où** la partie (n° de trame) de l'information sur le code relatif à temps avec un pouvoir de résolution dans le temps supérieur, synchronisée temporairement avec la partie (n° de trame) de l'information sur le code relatif à temps avec un pouvoir de résolution dans le temps inférieur, est enregistrée numériquement sur la même piste (S2).

3. Méthode conforme à la revendication 1 ou 2, **où** une étape de comptage est incrémentée à l'état H et décrémentée à l'état L, la position de compteur est enregistrée à chaque flanc positif et le compteur est remis à zéro.

4. Méthode conforme à l'une des revendications précédentes, **où** les valeurs 25%, 50%, 75% sont choisies pour le signal des impulsions de trame (F) pour ajuster le rapport impulsions/pauses, **où** les valeurs en pourcentage indiquent la longueur d'un état H par rapport à la durée totale des signaux **et où** les signaux appropriés sont produits par une impulsion.

5. Méthode conforme à l'une des revendications précédentes, **où** un signal à haute fréquence est enregistré pour une résoluton précise et un signal à basse fréquence est enregistré pour une résolution normale.

6. Méthode conforme à l'une des revendications précédentes, **où** une séquence symétrique de 3 bits est insérée ou ajoutée symétriquement, respectivement devant et derrière le flanc, où chacun de ces bits se compose de signaux dont le rapport impulsions/pauses est de 50%, **où** la valeur en pourcentage indique la longueur d'un état H par rapport à la durée totale du signal.

7. Méthode d'enregistrement sur bande magnétique à pistes obliques pour les signaux analogiques et/ou numériques en utilisant au moins une tête supplémentaire de piste longitudinale, des amplificateurs d'enregistrement et de lecture appropriés et un dispositif de comptage de durée, où une information sur le code relatif à temps est enregistrée numériquement sur une piste longitudinale (S1), où l'information sur le code relatif à temps est divisée en deux parties (h, m, s; n° de trame) dont une partie (h, m, s) indique une information sur le code relatif à temps avec un pouvoir de résolution dans le temps inférieur et l'autre partie (n° de trame) indique une information sur le code relatif à temps avec un pouvoir de résolution dans le temps supérieur, où les impulsions de trame (F) sont enregistrées sur la piste longitudinale (S1), **caractérisée en ce que** les flancs avants des impulsions de trame (F) sont utilisés pour la synchronisation et les flancs arrières de l'impulsion de trame caractérisent les bits H ou L de la partie (h, m, s) de l'information sur le code relatif à temps avec un pouvoir de résolution dans le temps inférieur, conformément au rapport impulsions/pauses ajusté, **et en ce que** la partie (n° de trame) de l'information sur le code relatif à temps avec un pouvoir de résolution dans le temps supérieur, décalée en fonction de la fréquence par rapport à la partie (h, m, s) de l'information sur le code relatif à temps avec un pouvoir de résolution dans le temps inférieur, est enregistrée numériquement sur la même piste longitudinale (S1).
